# FASCICULE DE BREVET EUROPEEN

(11) **EP 1 144 978 B1**
(45) Date de publication et mention de la délivrance du brevet: **07.01.2004**
(21) Numéro de dépôt: 00966222.2
(22) Date de dépôt: 28.09.2000
(51) Int. Cl.: G01M 11/02, G02C 13/00

(54) **PROCEDE ET APPAREIL DE CENTRAGE D'UNE LENTILLE OPHTALMIQUE**
VERFAHREN UND GERÄT ZUR ZENTRIERUNG EINER OPHTALMISCHEN LINSE
METHOD AND APPARATUS FOR CENTRING AN OPHTHALMIC LENS

(30) Priorité: 07.10.1999 FR 9912513
(43) Date de publication de la demande: 17.10.2001
(73) Titulaire: BRIOT INTERNATIONAL, 27340 Pont de l'Arche (FR)
(72) Inventeur: VIDECOQ, Jean-Jacques, F-76570 Pavilly (FR); MERISSE, Jean-Emmanuel, François, Henry, F-27930 Tourneville (FR)
(74) Mandataire: Blot, Philippe Robert Emile
(86) Numéro de dépôt international: PCT/FR2000/002690
(87) Numéro de publication internationale: WO 2001/025744

(56) Documents cités:
- US-A- 4 737 918
- PATENT ABSTRACTS OF JAPAN vol. 010, no. 157 (P-464), 6 juin 1986 (1986-06-06) & JP 61 010739 A (TENRIYUU SEIKI KK), 18 janvier 1986 (1986-01-18)

## Description

La présente invention est relative à un procédé de détermination du centre optique d'une lentille ophtalmique, du type décrit dans le préambule de la revendication 1.

Elle s'applique en particulier à la pose automatique ou semi-automatique d'un adaptateur de moulage sur des ébauches circulaires de verres optiques destinées à être meulées.

La technique classique va tout d'abord être expliquée en regard des Figures 1 et 2, qui sont des schémas en perspective illustrant les parties principales de l'appareil utilisé, et de la Figure 3, qui est une vue schématique en coupe axiale verticale d'une lentille ophtalmique dont on recherche le centre optique.

Les appareils existants comportent un émetteur lumineux 1, notamment un faisceau lumineux ou une mire, et un récepteur 2, notamment un élément photosensible CCD ou autre. L'appareil comprend de plus un support 3 de lentille ophtalmique disposé entre l'émetteur et le récepteur. Ce support, transparent au rayonnement émis par l'émetteur, est constitué en pratique d'une table XY, munie éventuellement de moyens d'entraînement en rotation.

En l'absence de lentille, le récepteur analyse la position d'un point prédéterminé de l'image, typiquement de son barycentre O', qui est l'image du barycentre O de l'émetteur, ainsi que la dimension de l'image de l'émetteur. Cette dimension est évaluée en mesurant la distance séparant deux points spécifiques de l'image de l'émetteur sur le récepteur. La droite OO' constitue l'axe vertical de référence.

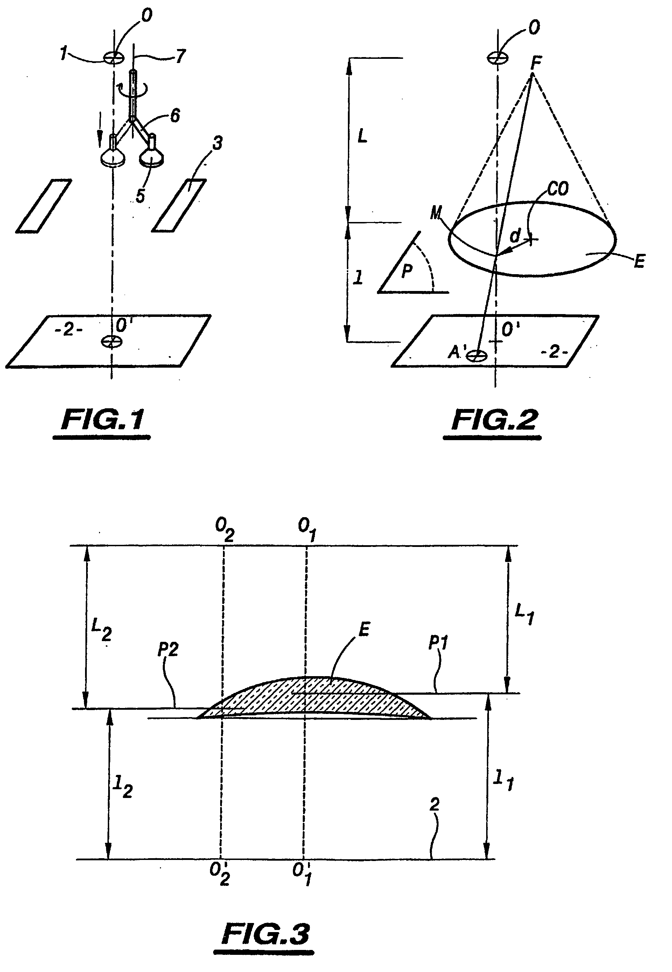

Lorsqu'une lentille ou verre optique ou ébauche E est placée dans l'appareil (Fig.2), sur le support 3, l'émetteur est vu à travers la lentille. L'image produite sur le récepteur est donc déviée/déformée en fonction des caractéristiques optiques de la lentille. Ainsi, en considérant le foyer objet F de la lentille et l'intersection M de l'axe OO' avec le plan moyen P de la lentille, qui est le plan passant à la moyenne de l'épaisseur de la lentille, la nouvelle position A' du barycentre de l'image se trouve sur la droite FM.

L'image ainsi déformée est analysée, le système recherche la nouvelle position A' du barycentre de l'image et mémorise la dimension de l'image de l'émetteur. A partir de ces informations, le système déduit les paramètres suivants :
(1) Le centre optique CO se trouve sur la droite définie par l'intersection de deux plans :
   - le plan moyen P de la lentille défini ci-dessus ; et
   - le plan défini par les points O, O' et A'.
(2) Le facteur de grossissement G de la lentille, qui est le rapport entre la dimension de l'image prise sans verre et la dimension de l'image prise à travers le verre.
(3) La distance d de décentrement de la lentille, c'est-à-dire la distance entre le centre optique CO de la lentille et l'axe OO' dans le plan moyen de la lentille. Cette distance est calculée en mesurant sur l'image la distance O'A' et en appliquant cette valeur à une fonction du type d = f (O'A',G,L,I), où :
   - O'A' est mesuré sur l'image de l'émetteur sur le récepteur ;
   - G est le facteur de grossissement de la lentille ;
   - L est la distance entre l'émetteur et le plan moyen P de la lentille ; et
   - l est la distance entre le plan moyen de la lentille et le récepteur.

La fonction f est une fonction relativement simple, qui résulte de calculs d'optique géométrique classiques.

Lorsque le centre optique CO est ainsi déterminé, on l'aligne sur l'axe OO'. Un adaptateur de meulage 5, par exemple adhésif, est porté par un bras 6 qui pivote autour d'un axe vertical 7 parallèle à l'axe OO'. On aligne l'axe de l'adaptateur sur l'axe OO', puis on descend l'adaptateur jusqu'au contact de la lentille.

La position du centre optique déterminée de la manière expliquée ci-dessus, se révèle dans de nombreux cas imprécise, notamment pour les raisons suivantes.
a) Pour des verres de faible correction, un décentrement d de plusieurs centimètres génère une distance O'A' très petite. Pour un décentrement de quelques millimètres, la distance O'A' devient infime. Dans ce contexte une erreur infime sur la mesure de O'A' est multipliée, par effet de levier, sur la position calculée du centre optique de la lentille. De plus, lorsque O'A' devient très petit, la distance O'A' est plus- petite que la résolution de mesure des récepteurs communément utilisés ; ceci génère des erreurs importantes sur la mesure de O'A' et donc sur la position du centre optique.
(b) La formule permettant de définir la distance d prend en compte les grandeurs L et l, qui sont les distances respectives de l'émetteur et du récepteur au plan moyen P de la lentille à l'endroit de la mesure.

En réalité, si l'on considère deux mesures faites sur une même lentille à deux endroits différents suivant deux axes O₁O'₁ et O₂O'₂ (Fig.3), le plan moyen P1, P2 ne se situe pas au même niveau puisque selon les courbures de la lentille, son épaisseur et sa flèche varient. Les grandeurs L1 et l₁ sont par suite différentes des grandeurs L2 et l₂.

Ce problème est accentué si l'on considère toutes les lentilles à traiter, de la plus mince à la plus épaisse. En effet, l'épaisseur et la flèche des lentilles varient.

Finalement, les grandeurs L et l varient d'une lentille à l'autre, et elles varient aussi sur une même lentille si l'on considère deux points de mesures différents.

Pour toutes ces raisons, le centre optique déterminé comme ci-dessus est en fait un centre optique approximatif de la lentille.

Pour s'abstraire de ces difficultés, la majorité des systèmes prennent en compte un plan moyen qui est un plan se situant à la moyenne des épaisseurs de lentilles à traiter. Les grandeurs L et l ainsi fixées influent bien entendu de façon négative sur la précision de détection du centre optique.

L'invention a pour but de fournir un procédé et un appareil capables d'atteindre une précision de positionnement du centre optique des lentilles ophtalmiques de l'ordre de 0,1 mm, tout en utilisant un récepteur standard du commerce ayant un coût raisonnable et en modifiant de façon peu coûteuse les appareils existants.

A cet effet, l'invention a pour objet un procédé du type précité, caractérisé par la partie caractérisante de la revendication 1.

Le JP-61-010 739A décrit un procédé de détermination du centre optique d'une lentille, dans lequel la lentille est posée sur un tube, et un rayon laser est envoyé parallèlement à l'axe du tube, mais décalé par rapport à cet axe. L'image recueillie sur un récepteur dessine une ellipse lorsque le tube tourne de 360°. Le centre de la lentille coïncide avec l'axe du tube lorsque l'ellipse devient un cercle.

Le procédé selon l'invention peut comporter une ou plusieurs des caractéristiques des revendications 2 à 7, prises isolément ou suivant toutes leurs combinaisons techniques possibles.

L'invention a également pour objet un appareil de centrage destiné à la mise en oeuvre du procédé défini ci-dessus.

Cet appareil est tel que décrit dans la revendication 8.

D'autres caractéristiques de cet appareil sont décrites dans les revendications 9 à 11.

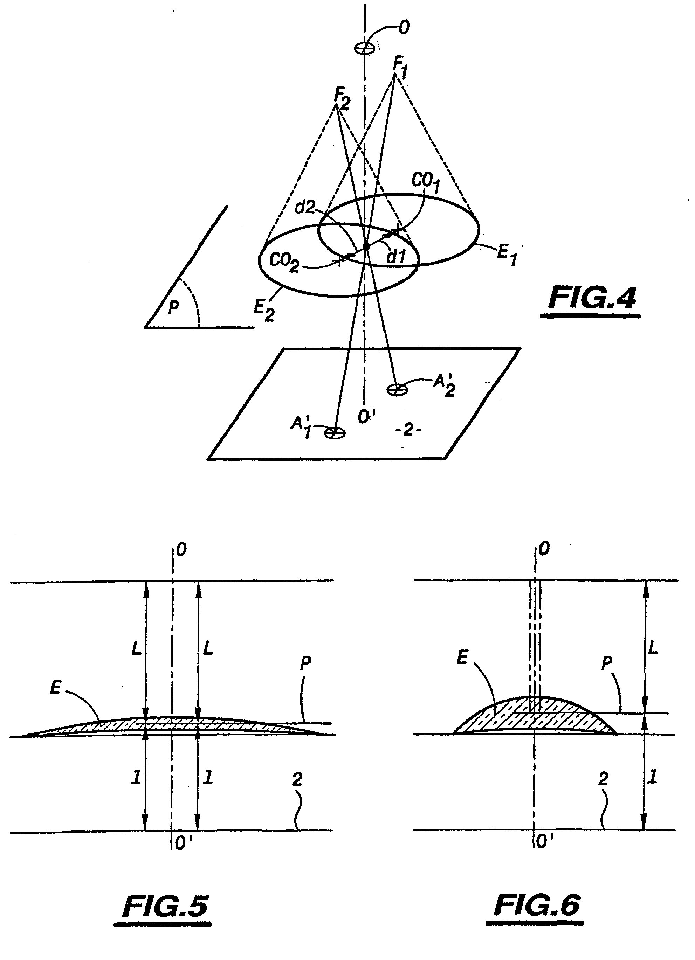

Des exemples de mise en oeuvre de l'invention vont maintenant être décrits en regard des Figures 4 à 9 annexées, sur lesquelles :
- la Figure 4 est un schéma analogue à la Figure 2, illustrant le procédé suivant l'invention ;
- les Figures 5 et 6 sont des vues schématiques en coupe verticale de deux lentilles différentes auxquelles on applique ce procédé ;

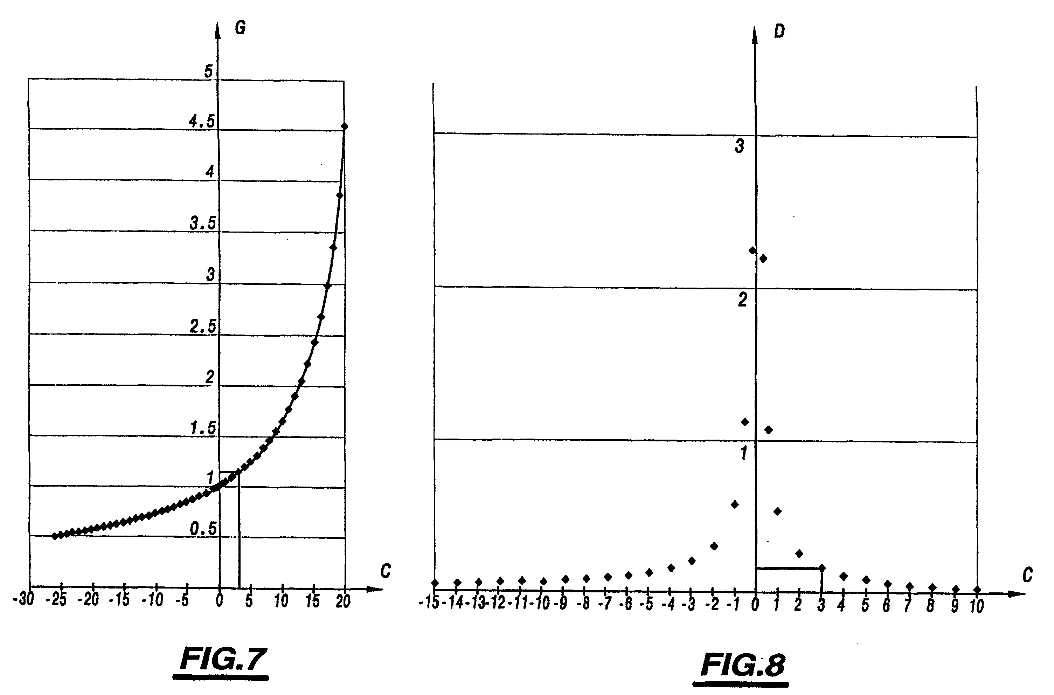

- la Figure 7 est une abaque qui porte en abscisses la puissance de la lentille en dioptries, et en ordonnées le facteur de grossissement correspondant dans l'appareil utilisé ;
- la Figure 8 est une abaque qui porte en abscisses la puissance de le lentille en dioptries, et en ordonnées le déplacement minimal utilisable de la lentille ; et

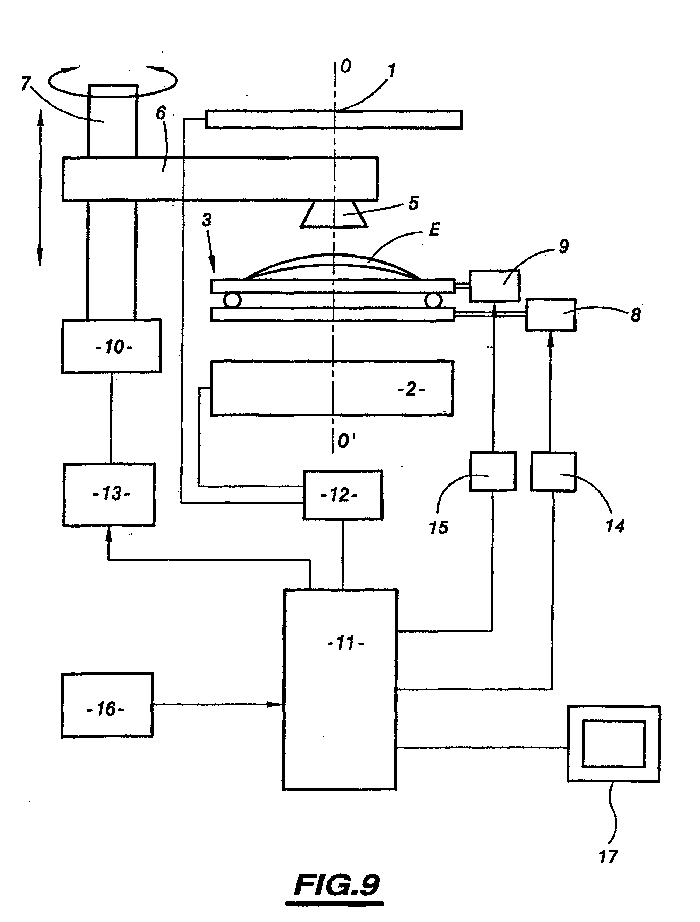

- la Figure 9 représente schématiquement l'appareil de centrage utilisé.

Pour expliquer le procédé de l'invention, on assimilera tout d'abord la lentille E à une lentille mince sans épaisseur.

On a illustré à la Figure 4 deux positions de la lentille dans le même plan P :
- une première position E₁ dans laquelle le centre optique approximatif se trouve en un emplacement CO₁ décalé d'une distance d₁ par rapport à l'axe OO'. Les points OO', F₁, A'₁ et CO₁ sont coplanaires comme décrit plus haut en regard de la Figure 2 ;
- une seconde position E₂ dans laquelle le centre optique approximatif se trouve en un emplacement CO₂ décalé d'une distance d₂ par rapport à l'axe OO'. Les points O,O', F₂, A'₂ et CO₂ sont coplanaires.

La lentille occupant la première position, on l'amène à sa seconde position par un déplacement suivant un vecteur connu Eₓ, E_{y}. On mesure le déplacement résultant A'_{X}, A'_{Y} du barycentre A', de A'₁ à A'₂.

Lorsque les positions E₁ et E₂ sont voisines de la position centrée de la lentille, dans un sens qui apparaîtra plus loin, les déplacements du point A' sont pratiquement proportionnels à ceux du centre optique, suivant chaque axe principal d'un repère orthonormé : A'_{X} = aE_{X}, A'_{Y} = bE_{Y}.

Ayant ainsi déterminé les coefficients a et b, on en déduit le déplacement de la lentille qui amène exactement son centre optique sur l'axe OO', c'est-à-dire qui amène le point A' en O'.

Les Figures 5 et 6 montrent que plus la lentille est puissante, c'est-à-dire plus sa correction est forte, plus les points CO₁ et CO₂ doivent être proches de l'axe OO' pour éviter une perte de précision. En effet, pour une lentille faiblement correctrice (Figure 5), le plan moyen P varie peu sur une plage relativement importante de positions du point de mesure par rapport au centre optique. En revanche, pour une lentille fortement correctrice (Figure 6), la même précision sur la position du plan moyen P suppose que l'on reste beaucoup plus près du centre optique.

Pour éviter toute difficulté de ce point de vue, et faire abstraction des variations de position du plan moyen P, on choisit deux positions E₁ et E₂ de la lentille qui sont sensiblement symétriques par rapport à sa position d'alignement du centre optique sur l'axe OO'.

Par ailleurs, il est clair qu'une autre condition du bon fonctionnement du procédé est que les distances O'A'₁ et O'A'₂ soient suffisantes pour être détectées de façon fiable par le récepteur 2.

Ces considérations conduisent au mode opératoire suivant.

La lentille E est posée sur le support 3 en une position quelconque. Une première image est saisie et analysée et on déduit une position approximative du centre optique de la manière classique décrite plus haut en regard de la Figure 2.

Comme on l'a indiqué, la mesure de cette première image fournit le facteur de grossissement G de la lentille dans l'appareil. L'abaque de la Figure 7 permet d'en déduire la puissance ou facteur de correction C de la lentille. Par exemple, comme illustré sur la Figure 7, on a mesuré un grossissement de 1,2, ce qui donne un facteur C de +3 dioptries.

On se reporte ensuite à l'abaque de la Figure 8. Celle-ci indique, pour un facteur C donné, le déplacement D de la lentille, en mm, qui est nécessaire pour observer un déplacement du point A' d'une unité élémentaire (1 pixel) sur le récepteur CCD. Ainsi, dans l'exemple précédent, le facteur C étant + 3 dioptries, le récepteur est capable de détecter le déplacement du point A' pour un déplacement de la lentille d'environ 0,15 mm.

Par conséquent, on choisira deux positions E₁ et E₂ dans lesquelles CO₁ et CO₂ sont écartés d'une même distance d₁ = d₂, qui est nettement supérieure à 0,15 mm, de l'axe OO'. En pratique, les positions E₁ et E₂ sont choisies de manière que CO₁ et CO₂ soient symétriques par rapport à l'axe OO', comme représenté.

En particulier, la première position E₁ peut être la position qui a servi à déterminer le point CO, si la distance d de la Figure 2 convient.

A partir des deux positions de la lentille, on calcule les coefficients a et b précités, on en déduit le déplacement que doit effectuer la lentille pour que le centre optique soit aligné avec l'axe OO', et on effectue ce déplacement.

Enfin, la lentille étant ainsi centrée avec précision, on amène l'adaptateur 5 sur l'axe OO', et on provoque sa descente jusqu'à sa fixation par adhérence sur la lentille. L'adaptateur est alors sensiblement parfaitement centré sur le centre optique de cette dernière.

On a schématisé sur la Figure 9 l'appareil mettant en oeuvre le procédé décrit ci-dessus. On retrouve l'émetteur 1, le récepteur 2, le support de lentille 3, constitué par une table XY, avec un moteur X 8 et un moteur Y 9. Le bras 6 portant un adaptateur 5 est monté sur un axe vertical 7 de façon à la fois pivotant et mobile en translation verticale, comme schématisé par les flèches. Les moyens d'entraînement du bras 6 sont schématisés en 10.

On a également représenté sur la Figure 9 une unité de traitement d'informations et de commande 11, des interfaces 12 à 15 entre cette unité et les organes 1-2, 8, 9 et 10 respectivement, une interface homme-machine 16 reliée à l'unité 11, et un afficheur 17 relié à cette même unité.

Bien entendu, l'unité 11 est alimentée par les données et les moyens de calcul nécessaires à l'exécution du programme décrit plus haut, et il s'agit là de la seule modification par rapport aux appareils classiques de centrage.

Avec un tel appareil, on peut réaliser la pose de l'adaptateur sur une lentille E de façon automatique, ou au moins semi-automatique pour permettre un choix par l'opérateur des deux positions E1 et E2.

En variante, on comprend que la lentille peut être posée sur un support fixe tandis que les déplacements précités sont effectués par l'ensemble émetteur-récepteur et par l'arbre 7.

## Revendications

1. Procédé de détermination du centre optique d'une lentille ophtalmique, du type dans lequel :
- en l'absence de lentille, on analyse une première image d'un émetteur de rayonnement (1) sur un récepteur (2), l'émetteur et le récepteur étant alignés sur un axe de référence (OO') ;
- on place la lentille ophtalmique (E) sur un support (3) transparent au rayonnement et situé entre l'émetteur (1) et le récepteur (2), et on analyse la dimension et la position de l'image modifiée obtenue ; et
- on déduit de cette analyse la position d'un centre optique approximatif (CO) de la lentille,
**caractérisé en ce qu'**on effectue en outre les opérations suivantes :
- on déplace la lentille suivant un vecteur prédéterminé (CO₁-CO₂);
- on mesure le déplacement résultant (A'₁-A'₂) d'un point prédéterminé de l'image ; et
- on déduit de cette dernière mesure la position du centre optique de la lentille.

2. Procédé suivant la revendication 1, **caractérisé en ce que**, après avoir déterminé le centre optique approximatif de la lentille, on déplace la lentille (E) pour amener ce centre optique approximativement à une première position déterminée (CO₁), puis à une seconde position déterminée (CO₂) décalée sensiblement de la même distance (d₁, d₂) par rapport à l'axe de référence (OO') que ladite première position, et on mesure le déplacement dudit point prédéterminé de l'image de l'émetteur (1) lorsque le centre optique approximatif s'est déplacé de la première position prédéterminée (CO₁) à la seconde position déterminée (CO₂).

3. Procédé suivant la revendication 2, **caractérisé en ce que** lesdites première et seconde positions déterminées (CO₁, CO₂) sont sensiblement symétriques par rapport à l'axe de référence (O').

4. Procédé suivant l'une quelconque des revendications 1 à 3, **caractérisé en ce que** ledit point prédéterminé est le barycentre (O', A') de l'image.

5. Procédé suivant l'une quelconque des revendications 1 à 4, **caractérisé en ce qu'**on choisit une amplitude du ou de chaque déplacement de la lentille (E) d'autant plus faible que la puissance de la lentille est plus grande.

6. Procédé suivant l'une quelconque des revendications 1 à 5, **caractérisé en ce que**, après détermination du centre optique de la lentille (E), on amène ce centre optique sur l'axe de référence (OO').

7. Procédé suivant la revendication 6, **caractérisé en ce que**, après avoir amené le centre optique sur l'axe de référence (OO'), on y pose un adaptateur (5) destiné au meulage de la lentille.

8. Appareil de centrage d'une lentille ophtalmique, du type comprenant un émetteur de rayonnement (1), un récepteur de rayonnement (2), un support de lentille (3) transparent au rayonnement et disposé entre l'émetteur et le récepteur, et des moyens (11) d'analyse du rayonnement capté et de commande, adaptés pour faire effectuer à la lentille (E) des mouvements relatifs par rapport à l'axe de référence (OO') défini par l'émetteur et le récepteur, **caractérisé en ce que** les moyens d'analyse et de commande (11) sont adaptés pour commander un déplacement de la lentille entre deux positions (E₁, E₂), mesurer le déplacement correspondant (A'₁, A'₂) de l'image de l'émetteur (1) sur le récepteur (2), en déduire le déplacement de la lentille nécessaire pour disposer son centre optique sur l'axe de référence, et commander ce déplacement.

9. Appareil suivant la revendication 8, **caractérisé en ce que** lesdites deux positions (E₁, E₂) sont sensiblement décalées d'une même distance par rapport à l'axe de référence (OO').

10. Appareil suivant la revendication 9, **caractérisé en ce que** lesdites deux positions (E₁, E₂) sont sensiblement symétriques par rapport à l'axe de référence (OO').

11. Appareil suivant l'une quelconque des revendications 8 à 10, **caractérisé en ce que** les moyens d'analyse et de commande (11) contiennent des données permettant de déterminer un déplacement minimal de la lentille (E) pour assurer un déplacement de l'image détectable sur le récepteur (2).

## Patentansprüche

1. Verfahren zur Bestimmung des optischen Zentrums einer ophtalmischen Linse, bei dem:
- in Abwesenheit der Linse ein erstes Bild einer Strahlungsquelle (1) auf einem Empfänger (2) analysiert wird, wobei die Strahlungsquelle und der Empfänger auf einer Bezugsachse (OO') ausgerichtet sind,
- die ophtalmische Linse (E) auf einen für die Strahlung transparenten Träger (3) aufgelegt wird, der sich zwischen der Strahlungsquelle (1) und dem Empfänger (2) befindet, und die Größe und die Lage des erhaltenen veränderten Bildes analysiert wird und
- aus dieser Analyse die Position eines angenährten optischen Zentrums (CO) der Linse bestimmt wird,
**dadurch gekennzeichnet, daß** außerdem die folgenden Operationen ausgeführt werden:
- die Linse wird gemäß einem vorbestimmten Vektor (CO₁ - CO₂) verschoben,
- die resultierende Verschiebung (A'₁ - A'₂) eines vorbestimmten Punktes des Bildes wird gemessen, und
- die Lage des optischen Zentrums der Linse wird aus dieser letzteren Messung bestimmt.

2. Verfahren nach Anspruch 1, **dadurch gekennzeichnet, daß** man, nachdem das angenährte optische Zentrum der Linse bestimmt worden ist, die Linse (E) so verschiebt, daß dieses optische Zentrum nährungsweise in eine bestimmte erste Position (CO₁) und dann in eine bestimmte zweite Position (CO₂) gebracht wird, die zu der Bezugsachse (OO') im wesentlichen den gleichen Abstand (d₁, d₂) aufweist wie die genannte erste Position, und daß man die Verschiebung des genannten vorbestimmten Punktes des Bildes der Strahlungsquelle (1) mißt, während sich das angenährte optische Zentrum aus der ersten bestimmten Position (CO₁) in die zweite bestimmte Position (CO₂) verschiebt.

3. Verfahren nach Anspruch 2, **dadurch gekennzeichnet, daß** die genannten bestimmten ersten und zweiten Positionen (CO₁, CO₂) im wesentlichen symmetrisch zur Bezugsachse (O, O') liegen.

4. Verfahren nach einem der Ansprüche 1 bis 3, **dadurch gekennzeichnet, daß** der genannte vorbestimmte Punkt der Mittelpunkt (O', A') des Bildes ist.

5. Verfahren nach einem der Ansprüche 1 bis 4, **dadurch gekennzeichnet, daß** man für die oder jede Verschiebung der Linse (E) eine Amplitude wählt, die um so kleiner ist, je größer die Stärke der Linse ist.

6. Verfahren nach einem der Ansprüche 1 bis 5, **dadurch gekennzeichnet, daß** man, nachdem das optische Zentrum der Linse (E) bestimmt worden ist, dieses optische Zentrum auf die Bezugsachse (OO') ausrichtet.

7. Verfahren nach Anspruch 6, **dadurch gekennzeichnet, daß** man, nachdem das optische Zentrum auf die Bezugsachse (OO') ausgerichtet worden ist, einen zum Schleifen der Linse bestimmten Adapter (5) auf es aufsetzt.

8. Gerät zur Zentrierung einer ophtalmischen Linse, mit einer Strahlungsquelle (1), einem Empfänger (2) für die Strahlung, einem für die Strahlung transparenten und zwischen der Strahlungsquelle und dem Empfänger angeordneten Träger (3) für die Linse und Mitteln (11) zur Analyse der empfangenen Strahlung und zur Steuerung, die dazu ausgebildet sind, Relativbewegungen der Linse (E) in bezug auf die durch die Strahlungsquelle und den Empfänger definierte Bezugsachse (OO') zu bewirken, **dadurch gekennzeichnet, daß** die Analyse- und Steuermittel (11) dazu ausgebildet sind, eine Verschiebung der Linse zwischen zwei Positionen (E₁, E₂) zu steuern, die entsprechende Verschiebung (A'₁, A'₂) des Bildes der Strahlungsquelle (1) auf den Empfänger (2) zu messen, daraus die Verschiebung der Linse abzuleiten, die notwendig ist, um ihr optisches Zentrum auf die Bezugsachse auszurichten, und diese Verschiebung zu steuern.

9. Gerät nach Anspruch 8, **dadurch gekennzeichnet, daß** die beiden Positionen (E₁, E₂) im wesentlichen um den gleichen Abstand von der Bezugsachse (OO') entfernt sind.

10. Gerät nach Anspruch 9, **dadurch gekennzeichnet, daß** die beiden genannten Positionen (E₁, E₂) im wesentlichen symmetrisch in bezug die Bezugsachse (OO') liegen.

11. Gerät nach einem der Ansprüche 8 bis 10, **dadurch gekennzeichnet, daß** die Analyse- und Steuermittel (11) Daten enthalten, die es gestatten, eine kleinste Verschiebung der Linse (E) zu bestimmen, die zu einer mit dem Empfänger (2) detektierbaren Verschiebung des Bildes führt.

## Claims

1. Method of determining the optical centre of an ophthalmic lens, of the type in which :
- in the absence of a lens, a first image from a radiation emitter (1) is analysed on a receiver (2), the emitter and the receiver being aligned on a reference axis (OO');
- the ophthalmic lens (E) is placed on a support (3) which is transparent to the radiation and situated between the emitter (1) and the receiver (2), and the dimension and position of the obtained modified image is analysed; and
- from this analysis the position of an approximate optical centre (CO) of the lens is deduced,
**characterised in that** the following steps are also carried out :
- the lens is displaced following a predetermined vector (CO₁-CO₂);
- the resultant displacement (A'₁-A'₂) of a predetermined point of the image is measured; and
- from this last measurement, the position of the optical centre of the lens is deduced.

2. Method according to claim 1, **characterised in that**, after the approximate optical centre of the lens has been determined, the lens (E) is displaced so that this optical centre is brought approximately to a first determined position (CO₁), then to a second determined position (CO₂) offset by substantially the same distance (d₁, d₂) relative to the reference axis (OO') as the first position, and the displacement of the said predetermined point of the image from the emitter (1) is measured when the approximate optical centre is moved from the first predetermined position (CO₁) to the second determined position (CO₂).

3. Method according to claim 2, **characterised in that** the said first and second determined positions (CO₁-CO₂) are substantially symmetrical relative to the reference axis (O').

4. Method according to any of claims 1 to 3, **characterised in that** the said predetermined point is the barycentre (O', A') of the image.

5. Method according to any of claims 1 to 4, **characterised in that** an amplitude of the or each lens displacement (E) is selected where the greater the power of the lens, the weaker the amplitude.

6. Method according to any of claims 1 to 5, **characterised in that**, after the optical centre of the lens (E) has been determined, this optical centre is brought onto the reference axis (OO').

7. Method according to claim 6, **characterised in that**, after the optical centre has been brought onto the reference axis (OO'), an adaptor is positioned (5) which is intended to grind the lens.

8. Method for centring an ophthalmic lens, of the type comprising a radiation emitter (1), a radiation receiver (2), a lens support (3) which is transparent to the radiation and is arranged between the emitter and the receiver, and means (11) for analysing the captured radiation which are also control means, adapted to cause relative movements to the lens (E) in relation to the reference axis (OO') defined by the emitter and the receiver, **characterised in that** the analysis and control means (11) are adapted to control a displacement of the lens between two positions (E₁, E₂), to measure the corresponding displacement (A'₁, A'₂) of the image from the emitter (1) onto the receiver (2), and to thereby deduce the necessary displacement of the lens to position its optical centre on the reference axis, and to control this displacement.

9. Apparatus according to claim 8, **characterised in that** the said two positions (E₁, E₂), are offset by substantially the same distance relative to the reference axis (OO').

10. Apparatus according to claim 9, **characterised in that** the said two positions (E₁, E₂) are substantially symmetrical relative to the reference axis (OO').

11. Apparatus according to any of claims 8 to 10, **characterised in that** the analysis and control means (11) contain data allowing a minimal displacement of the lens (E) to be determined to ensure a detectable displacement of the image on the receiver (2).
